# EUROPEAN PATENT SPECIFICATION

(11) **EP 3 232 054 B1**
(45) Date of publication and mention of the grant of the patent: **15.07.2020**
(21) Application number: 17166400.6
(22) Date of filing: 13.04.2017
(51) Int. Cl.: F03D 15/10, F03D 7/02

(54) **WIND POWER GENERATOR**
WINDKRAFTGENERATOR
GÉNÉRATEUR D'ÉNERGIE ÉOLIENNE

(30) Priority: 14.04.2016 JP 2016081321
(43) Date of publication of application: 18.10.2017
(73) Proprietor: Hitachi, Ltd., Tokyo (JP); Nabtesco Corporation, Tokyo (JP)
(72) Inventor: YU, Juhyun, Chiyoda-ku, Tokyo (JP); AZUMAISHI, Ryouji, Chiyoda-ku, Tokyo (JP); YOKOYAMA, Katsuhiko, Fuwa-gun, Gifu (JP); ASAKAWA, Yuichi, Fuwa-gun, Gifu (JP)
(74) Representative: Grünecker Patent- und Rechtsanwälte PartG mbB

(56) References cited:
- DE-U1- 8 212 551
- US-A1- 2014 311 851

## Description

### TECHNICAL FIELD

The present invention relates generally to a wind power generator and more particularly to a wind power generator provided with a drive unit for making a nacelle or a blade rotate via a ring gear.

### BACKGROUND

A windmill that is provided with a nacelle installed at an upper portion of a tower and a plurality of blades mounted to said nacelle has been used in a wind power generator or the like. The nacelle is provided rotatably with respect to the tower, and by a yaw drive unit, the nacelle is driven to rotate with respect to the tower so as to be pivotable depending on a direction of a wind. Such a wind turbine is known from document US2014/311851 A1 which shows the features of the preamble of claim 1. The blades, on the other hand, are installed swingably in a pitch direction with respect to a hub mounted to the nacelle, and by a pitch drive unit, an axial portion of the blades is driven to rotate with respect to the hub so that a pitch angle of the blades can be changed.

As a drive unit used in the above-mentioned wind power generator, for example, an eccentric swing type speed reducer disclosed in Patent Literature 1 can be used favorably. In this speed reducer, a rotary drive force from a motor is transmitted to a plurality of spur gears via an input gear, and a revolving operation of a crank shaft and rotation of a carrier are performed via a swing mechanism including the crank shaft, an external-tooth gear, and pin internal teeth. Further, in accordance with the rotation of the carrier, an output shaft spline-coupled to said carrier is made to rotate, and thus a large torque can be obtained via a pinion mounted to said output shaft.

### RELEVANT REFERENCES

### LIST OF RELEVANT PATENT LITERATURE

Patent Literature 1: Japanese Patent Application Publication No. 2014-211204

### SUMMARY

In some cases, a windmill installed under the natural environment is subjected to an unanticipated wind, and thus an unexpectedly large external force is applied thereto. When the windmill is subjected to an unexpectedly large external force, an excessively large force is locally exerted on a movable portion of the windmill, sometimes causing breakage of components in, for example, a "joint portion between blades and a hub" or a "joint portion between a nacelle and a tower". Particularly, in these joint portions, a pinion provided on an output shaft of a drive unit that performs pitch driving and yaw driving is engaged with an engaging member such as a ring gear. The output shaft of the drive unit, however, is connected to a speed reducer and thus cannot rotate freely. Because of this, the pinion and the engaging member are brought to a mutually locked state, so that when a large external force acts on the movable portion of the windmill, a large force is applied to the drive unit and the engaging member, rendering the drive unit and the engaging member prone to breakage.

Furthermore, even in a case where an external force of such magnitude as not to cause breakage is acting on the movable portion of the windmill, when the drive unit is actuated in this state, a load larger than normal is applied to the movable portion, still rendering the drive unit and the engaging member prone to breakage. Moreover, in order to secure a sufficient torque, normally, a plurality of drive units are provided in the movable portion of the windmill. Accordingly, in a possible scenario where one of the plurality of drive units malfunctions and thus is locked, when another one of the windmill drive units is actuated in such a state, in some cases, a large force is applied between the pinion and the engaging member of any one of the drive units, causing breakage of the pinion and the engaging member.

When breakage of components such as the pinion and the engaging member occurs, it becomes necessary to replace the broken components or the drive unit itself. Such component replacement, however, is costly, and during a time when the component replacement is performed, an operation of the windmill must be stopped. Particularly, the ring gear provided in the joint portion between the nacelle and the tower and engaged with the drive units has a large size and is a relatively expensive component, and thus an operation of exchanging such a ring gear not only takes a lot of time and work but also involves a large cost.

There is, therefore, a demand for a mechanism that, even in a case where the drive units are subjected to an unexpected excessively large force, reduces a force applied to the components, thereby being able to prevent a malfunction such as breakage before it occurs.

The present invention has been made in view of the above-mentioned circumstances and has as its object to provide a wind power generator that, even when subjected to an excessively large force, reduces a force applied to components, thereby being able to prevent a malfunction before it occurs.

One aspect of the present invention relates to a wind power generator provided with a ring gear, a drive unit for making a nacelle or a blade rotate via the ring gear, a clutch hydraulic source, and a clutch control portion. The drive unit has a motor having a power shaft, an input gear made to rotate by power transmitted thereto from the power shaft, a speed reduction portion having an output shaft made to rotate by power inputted via the input gear, a pinion that is engaged with the ring gear and made to rotate by rotary power transmitted from the output shaft, and a hydraulic clutch mechanism that performs switching between transmission and non-transmission of the rotary power from the output shaft to the pinion. The clutch hydraulic source supplies a hydraulic pressure to the clutch mechanism, and the clutch control portion controls a hydraulic pressure supplied form the clutch hydraulic source to the clutch mechanism.

According to this aspect, even when the wind power generator is subjected to an excessively large force, by the clutch mechanism, a state of rotary power transmitted from the output shaft to the pinion is switched to a non-transmission state so that power applied to the pinion is reduced, thereby being able to prevent a malfunction before it occurs. Furthermore, providing the clutch hydraulic source and the clutch control portion separately from the drive unit can contribute also to miniaturization of the drive unit.

It may also be possible that a plurality of the drive units are provided, and the clutch hydraulic source supplies a hydraulic pressure to the clutch mechanism of each of the plurality of the drive units.

According to this aspect, the clutch mechanism of each of the plurality of the drive units can be driven by using the single clutch hydraulic source, and thus compared with the configuration in which the single clutch hydraulic source is provided with respect to the single drive unit, a simplified configuration can be obtained, and thus miniaturization of the nacelle or a hub (a rotor) can be enhanced.

It may also be possible that the wind power generator is provided further with a gear inhibition portion for inhibiting rotation of the nacelle or the blade via the ring gear, which uses a hydraulic pressure supplied from the clutch hydraulic source to inhibit the rotation of the nacelle or the blade.

According to this aspect, a simplified configuration can be obtained, and thus miniaturization of the nacelle or the hub (the rotor) can be enhanced.

It may also be possible that the clutch mechanism has a first friction plate mounted to the output shaft and a second friction plate mounted to the pinion. In this case, the clutch control portion performs transmission of rotary power from the output shaft to the pinion by engaging the first friction plate with the second friction plate, and withholds transmission of rotary power from the output shaft to the pinion by releasing engagement between the first friction plate and the second friction plate.

It may also be possible that the clutch control portion has a clutch driving member that is brought into contact with at least one of the first friction plate and the second friction plate and a clutch switching portion that performs switching between engagement and non-engagement between the first friction plate and the second friction plate by controlling movement of said clutch driving member.

It may also be possible that the clutch driving member includes a hydraulic piston, and the clutch switching portion performs the switching between engagement and non-engagement between the first friction plate and the second friction plate by controlling movement of the hydraulic piston via a liquid transmission medium.

It may also be possible that a plurality of the drive units are provided, and there is provided a current detection portion that detects an amount of electric current consumed by a motor provided in each of the plurality of the drive units. In this case, based on a difference in amount of electric current consumed by the motor among the plurality of the drive units, which is derived from a detection result by the current detection portion, the clutch control portion controls a hydraulic pressure supplied from the clutch hydraulic source to the clutch mechanism provided in each of the plurality of the drive units.

According to this aspect, the clutch mechanism can be controlled based on a difference among the motors in amount of electric current consumed thereby.

### ADVANTAGES

According to the present invention, switching between transmission and non-transmission of rotary power from the output shaft to the pinion can be performed by the clutch mechanism. Thus, even when the drive unit is subjected to an excessively large force, by the clutch mechanism, a state of rotary power transmitted from the output shaft to the pinion is switched to a non-transmission state, thereby being able to prevent a malfunction before it occurs.

### BRIEF DESCRIPTION OF THE DRAWINGS

Fig. 1 is a schematic sectional view showing one example of a windmill according to one embodiment of the present invention.
Fig. 2 is a functional block diagram showing an outline of a configuration example of a drive unit.
Fig. 3 is a functional block diagram showing an outline of a configuration example of a speed reducer.
Fig. 4 is a functional block diagram showing an outline of a configuration example of a clutch mechanism.
Fig. 5 is a sectional view illustratively showing a configuration of a drive unit and a functional configuration of a clutch mechanism.
Fig. 6A is a conceptional view for explaining a mechanism of transmission and non-transmission of rotary power from an output shaft to a pinion in a configuration shown in Fig. 5, which shows a transmission state of rotary power.
Fig. 6B is a conceptional view for explaining the mechanism of transmission and non-transmission of rotary power from the output shaft to the pinion in the configuration shown in Fig. 5, which shows a non-transmission state of rotary power.
Fig. 7 is a diagram showing a functional configuration example of a clutch mechanism and a clutch control portion according to one modification example.

### DESCRIPTION OF THE PREFERRED EMBODIMENTS

With reference to the appended drawings, the following describes one embodiment of the present invention.

While the following embodiment describes an example in which a drive unit provided in a windmill (a wind power generator) is used as a "yaw drive unit that drives a nacelle (a movable portion) to rotate with respect to a tower (a base portion)", a configuration of a drive unit mentioned below is applicable to all types of drive units for driving a movable portion of a windmill to rotate with respect to a base portion. Thus, for example, it may also be possible to use the drive unit mentioned below as a "pitch drive unit that drives a blade (a movable portion) to rotate in a pitch direction with respect to a hub (a base portion)". More specifically, for example, it may also be possible to use the drive unit mentioned below as a drive unit for making a nacelle or a blade rotate via an after-mentioned ring gear.

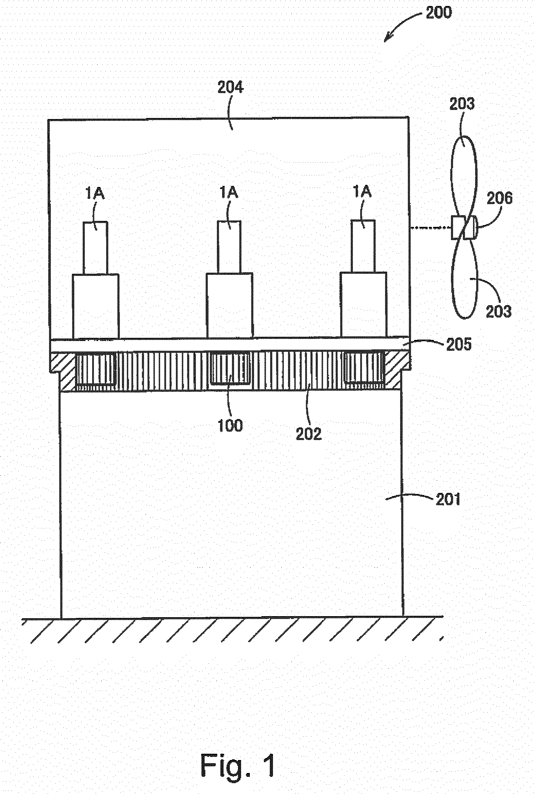

[Windmill (Wind Power Generator)] Fig. 1 is a schematic sectional view showing one example of a windmill 200 according to one embodiment of the present invention. In the following description, the "windmill 200" is an apparatus constituting a wind power generator, and thus the term "windmill 200" can be used synonymously with the term "wind power generator". The windmill 200 of this example may be provided with a tower 201, a nacelle 204 rotatably supported by the tower 201, and a plurality of blades 203 mounted to the nacelle 204 via a hub 206.

The tower 201 is a base portion installed on the ground, and an internal-tooth gear type ring gear 202 formed as a rotary drive gear may be fixedly mounted on an inner side of the tower 201. In the nacelle 204, there may be provided a rotary pedestal 205 fixedly mounted to said nacelle 204 and a plurality (especially, three or more) of drive units 1A mounted to said rotary pedestal 205. Each of the drive units 1A may be equipped with a pinion 100 that protrudes from a hole formed through the rotary pedestal 205 and is engaged with the ring gear 202. In the nacelle 204, the drive units 1A may be positioned so that the pinion 100 is disposed at each of a plurality of locations along a circumferential direction on an inner side of the ring gear 202. Thus, when respective motors of the plurality of drive units 1A make their power shafts rotate synchronously with each other so that the pinion 100 of each of the drive units 1A is driven to rotate, together with the rotary pedestal 205, the nacelle 204 as a whole may be driven to rotate (driven to pivot) with respect to the tower 201. As a result of this, an orientation of the hub 206 and the blades 203 mounted to the nacelle 204 can be changed. Rotation synchronism of the power shafts among the respective motors of the plurality of drive units 1A can be achieved by, for example, connecting a controller to the plurality of drive units 1A so that the motors are controlled by said controller. Furthermore, in the nacelle 204, there may further be provided a power transmission shaft joined to the hub 206, an speed-increasing gearbox, a power generator, a converter, and so on.

The hub 206 may be mounted rotatably with respect to the nacelle 204, and the plurality of blades 203 may be mounted to the hub 206 via an axial portion and disposed at an equal angle to each other. The blades 203 may be provided rotatably in the pitch direction about the axial portion with respect to the hub 206 and driven to rotate by a pitch drive unit so that their pitch angle can be changed as appropriate. While depiction of the pitch drive unit is omitted in this example, there is no particular limitation on a configuration of the pitch drive unit. For example, the blades 203 can also be driven to rotate by, for example, a pitch drive unit having a configuration similar to that of an after-mentioned drive unit 1A.

The windmill 200 is not limited to a configuration shown in Fig. 1. For example, while the ring gear 202 is provided fixedly with respect to the tower 201 in an example shown in Fig. 1, it may also be possible that the ring gear 202 is provided so as to rotate together with the nacelle 204. As configuration aspects of the "drive units 1A" and the "ring gear 202" engaged with the pinion 100 of each of said drive units 1A, various aspects have been adopted also in the known windmill 200. A technique related to the drive units 1A described below may be applicable also to drive units 1A and a ring gear 202 of such various configuration aspects.

[Drive unit] First, a description is given of an outline of a configuration of the drive units 1A according to this embodiment.

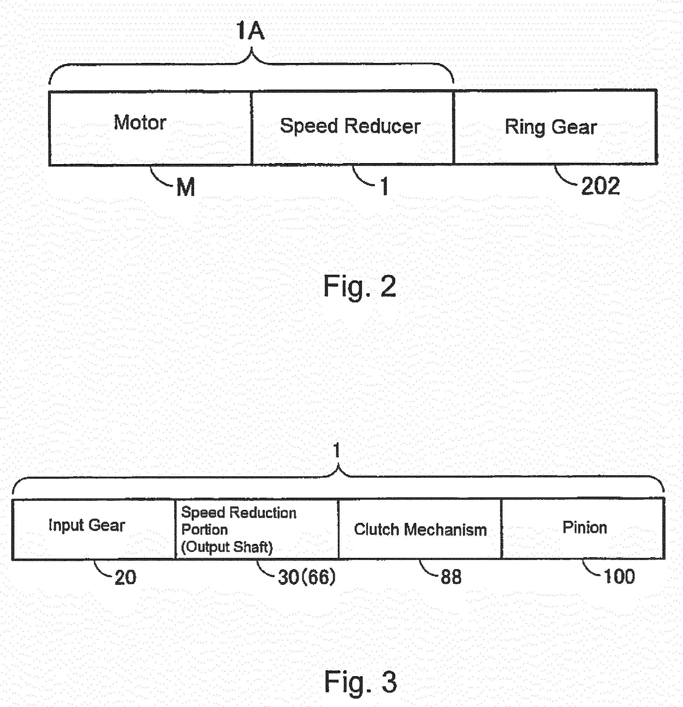

Fig. 2 is a functional block diagram showing an outline of a configuration example of the drive units 1A. The drive units 1A of this example may be each equipped with a motor M and a speed reducer 1, and rotary power supplied from the motor M to the speed reducer 1 may be decelerated by the speed reducer 1 to have an increased torque and transmitted to the ring gear 202 to be converted into a yaw drive force.

Fig. 3 is a functional block diagram showing an outline of a configuration example of the speed reducer 1. The speed reducer 1 of this example may include an input gear 20 made to rotate by power transmitted thereto from the power shaft provided in the motor M, a speed reduction portion 30 joined to the input gear 20, the pinion 100, and a clutch mechanism 88 interposed between the speed reduction portion 30 and the pinion 100. The speed reduction portion 30 may have an output shaft 66 made to rotate by power inputted from the power shaft via the input gear 20. The pinion 100 may be joined to the output shaft 66 of the speed reduction portion 30 via the clutch mechanism 88 and made to rotate by rotary power transmitted from the output shaft 66. The clutch mechanism 88 may perform switching between transmission and non-transmission of rotary power from the output shaft 66 of the speed reduction portion 30 to the pinion 100.

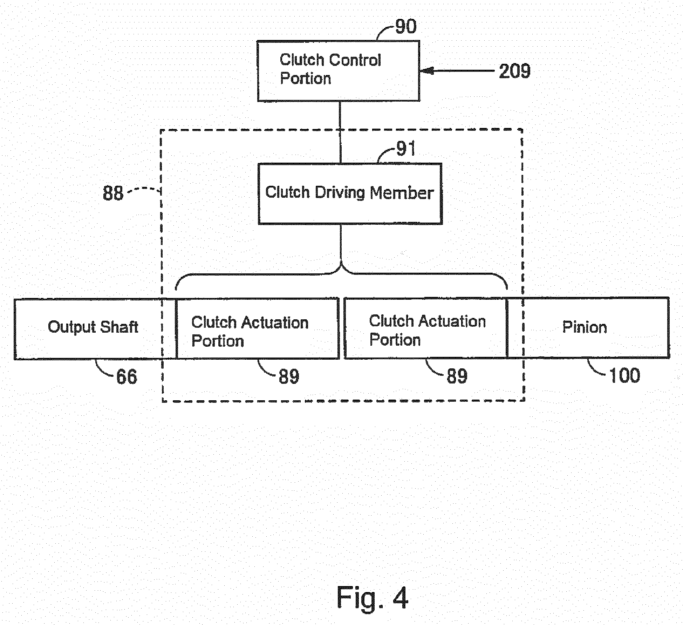

Fig. 4 is a functional block diagram showing an outline of a configuration example of the clutch mechanism 88. The clutch mechanism 88 of this example may have a pair of clutch actuation portions 89 provided between the output shaft 66 of the speed reduction portion 30 and the pinion 100 and a clutch driving member 91 that can move at least one of the pair of clutch actuation portions 89. The clutch actuation portions 89 may be mounted to the output shaft 66 and the pinion 100, respectively, and switching between an engagement state (a fixed state) and a non-engagement state (a non-fixed state) between one of the pair of clutch actuation portions 89 that is mounted to the output shaft 66 and the other clutch actuation portion 89 that is mounted to the pinion 100 can be performed by the clutch driving member 91. The clutch driving member 91 may be brought into contact with at least either one of the pair of clutch actuation portions 89 mounted to the output shaft 66 or the other clutch actuation portion 89 mounted to the pinion 100 and moved by a clutch control portion 90. The clutch control portion 90 of this example may control a hydraulic pressure supplied from a clutch hydraulic source to the clutch mechanism 88 so as to control movement of the clutch driving member 91, thus performing switching between engagement and non-engagement of the pair of clutch actuation portions 89. Furthermore, a current detection portion 209 that detects an amount of electric current consumed by the motor M provided in each of the plurality of drive units 1A may be connected to the clutch control portion 90, and a detection signal corresponding to the amount of electric current consumed by the motor M of each of the plurality of drive units 1A may be sent from the current detection portion 209 to the clutch control portion 90.

In the above-mentioned plurality of drive units 1A having the functional configuration shown in Fig. 2 to Fig. 4, in some cases, due to an unexpected reason, an abnormality occurs only in a particular one of the motors M, so that an amount of electric current consumed by that particular one of the motors M is excessively increased or decreased compared with an amount of electric current consumed by each of the other motors M. Based on a detection signal sent from the current detection portion 20, the clutch control portion 90 may detect whether or not such an abnormality of a particular one of the motors M has occurred. In a case where, based on a detection result (a detection signal) by the current detection portion 209, the clutch control portion 90 has detected an abnormality of a particular one of the motors M, the clutch control portion 90 may disengage a clutch between a corresponding one of the pairs of clutch actuation portions 89. That is, one of the pairs of clutch actuation portions 89 that is joined to one of the motors M that exhibits an abnormality related to an amount of electric current consumed may be brought to a non-engagement state, thus bringing the output shaft 66 and the pinion 100 to a non-joint state. Thus, a magnitude of power transmitted from the output shaft 66 to the pinion 100 may be reduced, thereby being able to prevent a malfunction such as breakage of the pinion 100 and the ring gear 202 before it occurs.

Next, a description is given of a typical example of the drive units 1A having the above-mentioned functional configuration. In an example described below, the present invention may be applied to a drive unit 1A provided with a so-called eccentric swing type speed reducing portion.

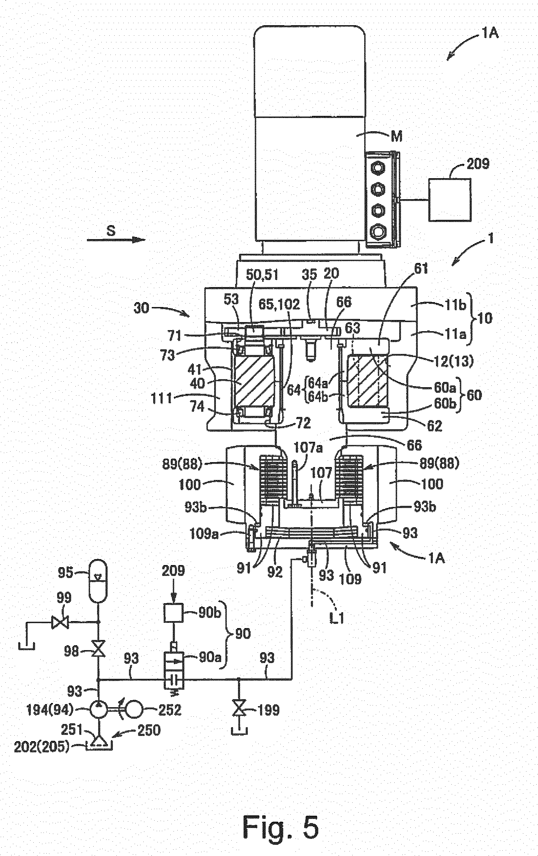

Fig. 5 is a sectional view illustratively showing a configuration of the drive unit 1A and a functional configuration of a clutch mechanism. The drive unit 1A of this example may be provided with a motor M having a power shaft 35 and a speed reducer 1 that is joined to each of the power shaft 35 and a pinion 100 and transmits power from the power shaft 35 to the pinion 100. As mentioned above, the drive unit 1A may be firmly fixed to the rotary pedestal 205 provided in the nacelle 204 of the windmill 200 (see Fig. 1).

A current detection portion 209 may be connected to the motor M provided in each of a plurality of the drive units 1A, and an amount of electric current consumed by the motor M may be detected by said current detection portion 209. The clutch control portion 90 may be connected to the current detection portion 209, and a detection signal indicating a detection result by the current detection portion 209 may be sent from the current detection portion 209 to the clutch control portion 90. In this embodiment, based on a detection signal from the current detection portion 209, the clutch control portion 90 may monitor and determine whether or not an abnormality of any one of the motors M has occurred. Based on a "difference in amount of electric current consumed by the motor M among the plurality of the drive units 1A", which is derived from a detection result (a detection signal) by the current detection portion 209, the clutch control portion 90 may control a hydraulic pressure supplied from the clutch hydraulic source to a pair of clutch actuation portions 89 (a clutch mechanism 88) provided in each of the plurality of the drive units 1A.

For example, in a case where, due to some circumstances, the power shaft 35 of only a particular one of the motors M is locked from rotating, so that an amount of electric current consumed by said particular one of the motors M is extremely increased compared with that of each of the other motors M, upon detecting such an abnormal state based on a detection signal from the current detection portion 209, the clutch control portion 90 may disengage a clutch between one of the pairs of clutch actuation portions 89 that is joined to an output shaft 66 linked to that particular one of the motors M, thus releasing joining between the output shaft 66 and the pinion 100. Thus, the clutch control portion 90 can control a hydraulic pressure so that, in a case where a difference in amount of electric current consumed is not less than a predetermined value, the clutch mechanism 88 (the clutch actuation portions 89) of at least one of the drive units 1A whose motor M has a largest amount of electric current consumed and/or one of the drive units 1A whose motor M has a smallest amount of electric current consumed do/does not transmit rotary power from the output shaft 66 to the pinion 100.

[Speed Reducer] The speed reducer 1 shown in Fig. 5 may be provided with an input gear 20 joined to the power shaft 35 of the motor M , an eccentric swing type speed reduction portion 30 having a plurality of spur gears 53 engaged with the input gear 20 and a plurality of crank shafts 50 fixed to the plurality of spur gears 53, respectively, and the pinion 100 joined to the output shaft 66 of the speed reduction portion 30 via the clutch actuation portions 89.

The speed reduction portion 30 may have a case 10 having internal teeth 12 provided on an inner circumferential side (an inner circumferential surface) thereof, an external-tooth gear 40 having external teeth 41 engaged with the internal teeth 12 of the case 10, a carrier 60 holding the external-tooth gear 40, and the pinion 100 joined to the carrier 60 via the clutch actuation portions 89 and the output shaft 66. The case 10 may be formed in a cylindrical shape and house, inside thereof, the input gear 20, the plurality of spur gears 53, the plurality of crank shafts 50, the external-tooth gear 40, and the carrier 60. The external-tooth gear 40 may freely rotatably hold the plurality of crank shafts 50 via an external-tooth bearing (depiction thereof is omitted) and function as a swing gear made to swing by the plurality of crank shafts 50 in accordance with rotation of the input gear 20 and the plurality of spur gears 53. The carrier 60 may freely rotatably hold the crank shafts 50 and hold the external-tooth gear 40 via the plurality of crank shafts 50.

In the speed reducer 1 having the above-mentioned configuration, rotary power inputted from the motor M to the input gear 20 may be decelerated in rotation speed by the speed reduction portion 30 and then be outputted from the pinion 100. The pinion 100 may be disposed so as to be engaged with the ring gear 202 (see Fig. 1). Thus, rotary power transmitted to the pinion 100 via the input gear 20 and the speed reduction portion 30 may be outputted, in a state of having an increased torque, as a yaw drive force to the ring gear 20.

In Fig. 5, a reference character "L1" denotes a center axis of the pinion 100. A center axis of the inner circumferential surface of the case 10, on which the internal teeth 12 are provided, may be positioned on the same axis as the center axis L1. In the following description, a direction described simply as an "axial direction" may refer to an extending direction on the center axis L1 or a direction parallel with the center axis L1. Furthermore, a direction orthogonal to the center axis L1 may be referred to as a "radial direction", and a direction about the center axis L1 may be referred to as a "circumferential direction".

The case 10 may have a main case portion 11a that is formed in a cylindrical shape and whose both end portions are open and a sub-case portion 11b fixed on one end portion side of the main case portion 11a. In this example, an edge portion of the main case portion 11a and an edge portion of the sub-case portion 11b may be fixed to each other with a bolt (depiction thereof is omitted) so that the main case portion 11a and the sub-case portion 11b are joined to each other. The output shaft 66 may protrude from the other end portion of the main case portion 11a opposite to one end portion thereof to which the sub-case portion 11b is mounted.

The internal teeth 12 may be formed of a plurality of internal-tooth pins each formed in a pin shape. These internal-tooth pins may be fitted into a plurality of pin grooves 13, respectively, which are formed at an equal distance from each other along the circumferential direction across an entire region of an inner circumferential surface of an input side portion 111 of the main case portion 11a and disposed so that a longitudinal direction of the internal-tooth pins are parallel with the center axis L1. The internal teeth 12 having the configuration described above may be disposed so as to be engaged with the external teeth 41 of the above-mentioned external-tooth gear 40.

The motor M may be mounted to the sub-case portion 11b of the case 10. The power shaft 35 provided in the motor M may extend toward an inner side of the sub-case portion 11b and fixedly connected to the input gear 20 disposed in the sub-case portion 11b. Rotary power generated by the motor M may be transmitted to the input gear 20 via the power shaft 35.

The input gear 20 may have a spur gear structure, and a center axis of the power shaft 35 of the motor M and a center axis of the input gear 20 may be positioned on the center axis L1 of the pinion 100. The input gear 20 may be disposed so as to be engaged with each of the plurality of spur gears 53, and rotary power transmitted from the power shaft 35 to the input gear 20 may be transmitted to the plurality of crank shafts 50 fixed to the plurality of spur gears 53, respectively.

The carrier 60 as a component of the speed reduction portion 30 may have a first holding portion 61 freely rotatably holding one end portion of each of the crank shafts 50 (an end portion thereof on a side of the input gear 20 and the spur gears 53), a second holding portion 62 freely rotatably holding the other end portion of each of the crank shafts 50 (an end portion thereof on a protruding side of the pinion 100), a support 63 joining the first holding portion 61 to the second holding portion 62, and a coupling cylindrical portion 64 for joining the carrier 60 to the output shaft 66. In Fig. 5, for the sake of convenience, the support 63 is shown by a chain double-dashed line.

The first holding portion 61 and the second holding portion 62 may be each formed in a circular ring shape and disposed opposite to each other at their respective positions separated in the axial direction. The support 63 may be provided so as to stride between a substantially middle region of the first holding portion 61 in the radial direction and a substantially middle region of the second holding portion 62 in the radial direction so that the first holding portion 61 and the second holding portion 62 are joined to each other. The coupling cylindrical portion 64 may be provided so as to stride between an inner circumferential edge of the first holding portion 61 and an inner circumferential edge of the second holding portion 62 and have a cylindrical shape, and a carrier-side spline portion 65 may be formed on an inner circumferential surface thereof. As mentioned above, the carrier-side spline portion 65 may be fitted into an output shaft-side spline portion 102 of the output shaft 66, and thus the output shaft 66 and the speed reduction portion 30 may be coupled to each other.

A first end portion through hole 71 may be formed through the first holding portion 61, and one end portion of each of the crank shafts 50 may be freely rotatably held by the first end portion through hole 71 via a first crank shaft bearing 73. Furthermore, a second end portion through hole 72 may be formed through the second holding portion 62, and the other end portion of each of the crank shafts 50 may be freely rotatably held by the second end portion through hole 72 via a second crank shaft bearing 74.

The carrier 60 of this example may be divided in the axial direction into two portions, i.e., composed of a first half member 60a disposed on a sub-case portion 11b side and a second half member 60b disposed on the protruding side of the pinion 100. The first half member 60a may have the above-mentioned first holding portion 61, a first support half portion constituting a part of the support 63, and a first cylindrical half portion 64a constituting a part of the coupling cylindrical portion 64. On the other hand, the second half member 60b may have the above-mentioned second holding portion 62, a second support half portion constituting a part of the support 63, and a second cylindrical half portion 64b constituting a part of the coupling cylindrical portion 64.

A bolt (depiction thereof is omitted) may be inserted into the first support half portion and the second support half portion so as to stride therebetween, thus joining the first support half portion and the second support half portion to each other, so that the first half member 80a and the second half member 60b may be joined to each other. Furthermore, the above-mentioned carrier-side spline portion 65 may be formed on respective inner circumferential surfaces of the first cylindrical half portion 64a and the second cylindrical half portion 64b so as to stride therebetween.

Each of the crank shafts 50 may have a shaft body 51 and an eccentricity member (depiction thereof is omitted) provided in said shaft body 51, and each of the spur gears 53 may be mounted to one end portion of the shaft body 51. That is, the one end portion of the shaft body 51 may protrude from the first end portion through hole 71 to the sub-case portion 11b side, and each of the spur gears 53 may be fixed to the one end portion of the shaft body 51 protruding from the first end portion through hole 71. Further, one end side portion of the shaft body 51 disposed between each of the spur gears 53 and the external-tooth gear 40 may be freely rotatably held by the first end portion through hole 71 via the first crank shaft bearing 73, and the other end side of the shaft body 51 may be freely rotatably held by the second end portion through hole 72 via the second crank shaft bearing 74.

In a state where the crank shafts 50 are held by the carrier 60, the eccentricity member of each of the crank shafts 50 may be disposed between the first holding portion 61 and the second holding portion 62 of the carrier 60. Meanwhile, through the external-tooth gear 40 provided between the first holding portion 61 and the second holding portion 62, in addition to a support through hole (depiction thereof is omitted) for passing the above-mentioned support 63 of the carrier 60 therethrough, a crank shaft through hole (depiction thereof is omitted) for inserting each of the crank shafts 50 thereinto may be formed parallel with the axial direction. The eccentricity member of each of the crank shafts 50 may be disposed in the crank shaft through hole of the external-tooth gear 40 via a crank shaft bearing (depiction thereof is omitted).

The external teeth 41 of the external-tooth gear 40 may be provided so that the number thereof is smaller by one or more than the number of the internal teeth 12 on an inner circumference of the case 10. Because of this, as each of the crank shafts 50 rotates, engagement between the external teeth 41 and the internal teeth 12 may be deviated to cause eccentric movement (crank movement) of the external-tooth gear 40, so that the external-tooth gear 40 may rotate while swinging.

In the speed reducer 1 having the configuration described above, when the input gear 20 rotates by rotary power transmitted from the power shaft 35 of the motor M, the spur gears 50 engaged with the input gear 20 may rotate, and thus the crank shafts 50 may rotate. When the crank shafts 50 rotate, the external-tooth gear 40 may eccentrically rotate so as to swing while deviating engagement with the internal teeth 12. Along with this eccentric rotation of the external-tooth gear 40, each of the crank shafts 50 may perform a revolving operation about the center axis L1 while rotating on its own axis. As a result of the above-described revolving operation of each of the crank shafts 50 in accordance with the swinging and eccentric rotation of the external-tooth gear 40, the carrier 60 holding the crank shafts 50 rotates. In accordance with this rotation of the carrier 60, the output shaft 66 spline-coupled to the carrier 60 may rotate. As described above, rotary power may be transmitted from the power shaft 35 of the motor M to the output shaft 66, and moreover, rotary power of the output shaft 66 may be transmitted to the pinion 100 via the clutch mechanism 88. Further, a torque may be transmitted from the pinion 100 to the ring gear 202, and thus an orientation of the nacelle 204 equipped with the rotary pedestal 205 or the blades 203 can be changed.

[Clutch Mechanism] Next, a description is given of a specific configuration example of the clutch mechanism 88. As mentioned above, the clutch mechanism 88 may be equipped with the clutch actuation portions 89 and the clutch driving member 91 and actuated under control of the clutch control portion 90. By using an arbitrary type of power such as pneumatic power and hydraulic power, the clutch control portion 90 can drive and control the clutch actuation portions 89 and the clutch driving member 91. For example, in the drive unit 1A shown in Fig. 5, hydraulic power may be used to drive and control the clutch actuation portions 89 and the clutch driving member 91. In the example shown in Fig. 5, a clutch hydraulic source 94, the clutch control portion 90, and so on may be installed separately from the drive unit 1A, and via a hydraulic supply path 93 filled with a liquid transmission medium such as oil, the clutch hydraulic source 94 and the clutch control portion 90 may be linked to the clutch driving member 91. The clutch driving member 91 may be provided so as to be movable in the axial direction by being pressed by the liquid transmission medium, and a contact state (a pressed state) of the clutch driving member 91 with respect to the clutch actuation portions 89 may vary depending on a position of the clutch driving member 91 in the axial direction. The clutch control portion 90 can change a pressing force of the clutch driving member 91 with respect to the clutch actuation portions 89 by adjusting a pressure of the liquid transmission medium in the hydraulic supply path 93 (particularly in a portion of the hydraulic supply path 90 between the clutch control portion 90 and the clutch driving member 91), thus controlling on and off states of the clutch actuation portions 89.

A clutch mechanism 88 and a clutch control portion 90 illustratively described below may be applied particularly to a case where the ring gear 202 is configured to rotate together with the nacelle 204. That is, in this example, a gear inhibition portion 250 for inhibiting rotation of the ring gear 202 may be provided, and a common hydraulic source 194 that is a power source for said gear inhibition portion 250 may function as the clutch hydraulic source 94. Moreover, the common hydraulic source 194 (the clutch hydraulic source 94) may supply a hydraulic pressure to the clutch mechanism 88 of each of the plurality of the drive units 1A. That is, the windmill 200 (the wind power generator) according to this example may be provided further with the gear inhibition portion 250 that inhibits rotation of the ring gear 202 and the nacelle 204 by using a hydraulic pressure supplied from the common hydraulic source 194 (the clutch hydraulic source 94), and the single common hydraulic source 194 may be used as a power source for the gear inhibition portion 250 and the plurality of the drive units 1A.

The gear inhibition portion 250 can be configured typically as a caliper brake and, in the example shown in Fig. 5, may include a press-against portion 251. The press-against portion 251 may be movable under control of an unshown controller so as to come into contact with and be separated from the ring gear 202. For example, in a case of fixing an orientation of the nacelle 204, the press-against portion 251 may be pressed against the ring gear 202, and thus the ring gear 202 may be held by the press-against portion 251 so that the ring gear 202 and the nacelle 204 are prevented from rotating. On the other hand, in a case of bringing an orientation of the nacelle 204 to a changeable state, the press-against portion 251 may be separated from the ring gear 202.

The common hydraulic source 194 driven by a hydraulic motor 252 may be connected to the gear inhibition portion 250, and a hydraulic pressure (namely, a pressure transmitted via the liquid transmission medium) supplied from the common hydraulic source 194 to the gear inhibition portion 250 may be used to obtain a propulsive force of the press-against portion 251 (namely, a holding force provided by the press-against portion 251). A relief valve 98, an accumulator 95, and a drain valve 99 may be sequentially connected to the common hydraulic source 194 via the hydraulic supply path 93, and these components may be used for driving and controlling the gear inhibition portion 250. Furthermore, a portion of the hydraulic supply path 93 that joins the common hydraulic source 194 to the relieve valve 98 may be branched partway, and a branched portion of the hydraulic supply path 93 may be connected to a pressure adjustment valve (an electromagnetic valve) 90a. Via this branched portion of the hydraulic supply path 93, the common hydraulic source 194 and the pressure adjustment valve 90a may be joined to each other.

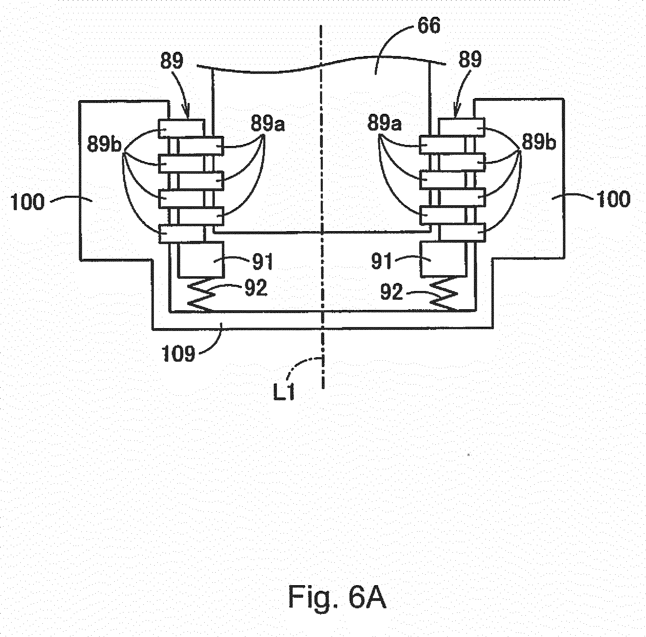

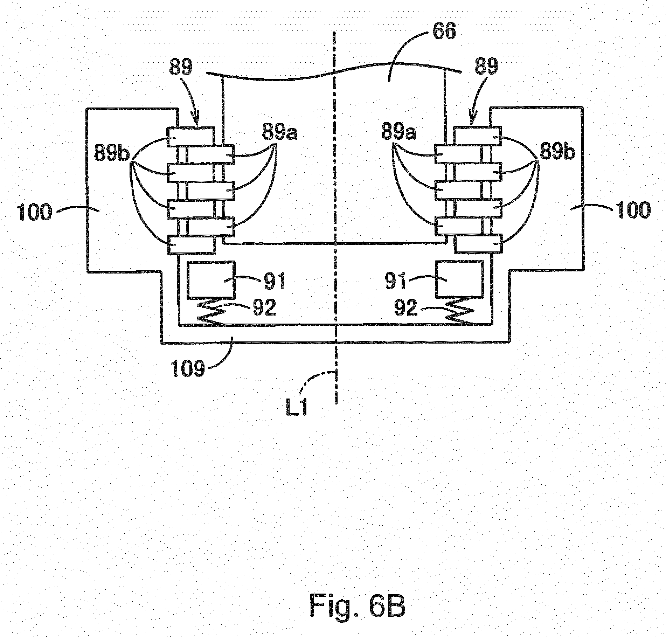

Meanwhile, via the clutch actuation portions 89 of the clutch mechanism 88, switching between transmission and non-transmission of rotary power from the output shaft 66 to the pinion 100 may be performed. The clutch actuation portions 89 may have a first friction plate 89a joined by spline coupling to the output shaft 66 and a second friction plate 89b joined by spline coupling to the pinion 100 (see after-mentioned Fig. 6A and Fig. 6B). The first friction plate 89a and the second friction plate 89b may be provided in such a manner that, while being restrained in terms of a behavior in a rotation direction about the center axis L1 by the output shaft 66 and the pinion 100, respectively, they are movable in a center axis L1 direction without being restrained by the output shaft 66 and the pinion 100, respectively. A behavior of the first friction plate 89a and the second friction plate 89b in the center axis L1 direction, however, may be restrained by a clutch driving member 91 and a first joint member 107 that are provided below the first friction member 89a and the second friction member 89b, and thus the first friction plate 89a and the second friction plate 89b may be prevented from falling off.

The first joint member 107 may be mounted to a tip end portion of the output shaft 66 via a screw member 107a and disposed on an inner side of the clutch driving member 91. An outer circumferential portion of the first joint member 107 may slightly protrude beyond the output shaft 66 relative to a direction perpendicular to the center axis L1 so as to be disposed below the first friction plate 89a and the second friction plate 89b. The outer circumferential portion of the first joint member 107 may be disposed at such a position that no pressing occurs between the first friction plate 89a and the second friction plate 89b that are supported by the first joint member 107, thus causing no friction force to be generated between the first friction plate 89a and the second friction plate 89b.

The clutch driving member 91 may be provided on an inner side of the pinion 100 below the clutch actuation portions 89 (the first friction plate 89a and the second friction plate 89b) so as to be movable to the center axis L1 direction. A lower portion of the clutch driving member 91 may be partly cut out, and an elastic member 92 may be inserted into a thus cut-out portion of the clutch driving member 91. The elastic member 92 shown in Fig. 5 may be formed of a leaf spring and held by a third joint member 109, which is mounted to a lower portion of the pinion 100 via a spring member 109a, and the clutch driving member 91. The elastic member 92 may use its own elastic force to apply a pressing force to the clutch driving member 91 relative to the center axis L1 direction so that the clutch driving member 91 is pressed against the clutch actuation portions 89 (the first friction plate 89a and the second friction plate 89b).

The lower portion of the pinion 100 may be partly cut out, and a part of the clutch driving member 91 may be inserted into a thus cut-out portion of the pinion 100. Relative to the center axis L1 direction, the cut-out portion of the pinion 100 may be formed to be larger than the part of the clutch driving member 91 that is inserted into said cut-out portion, and thus the clutch driving member 91 may be provided so as to be movable to the center axis L1 direction within a range permitted by the cut-out portion of the pinion 100. That is, between a "position at which contact is made with the pinion 100 (an upper end position)" and a "position at which contact is made with the third joint member 109 (a lower end position)", the clutch driving member 91 can slidably move along the pinion 100 and the first joint member 107. In a case where the clutch driving member 91 is disposed at a position other than the upper end position, a space may be formed between the pinion 100 and the clutch driving member 91, and said space may constitute a hydraulic action portion 93b through which the liquid transmission medium from the hydraulic supply path 93 flows in and out. In a case where the clutch driving member 91 is disposed at the upper end position, it may also be possible that a space (the hydraulic action portion 93b) is formed or not formed between the pinion 100 and the clutch driving member 91.

The hydraulic action portion 93b may, while having a liquid-tight structure provided by a sealing member such as an O-ring provided between the pinion 100 and the clutch driving member 91, communicate with a portion of the hydraulic supply path 93 that is formed in the pinion 100. The portion of the hydraulic supply path 93 that is formed in the pinion 100 may communicate with a portion of the hydraulic supply path 93 that is formed in the third joint member 109, and the portion of the hydraulic supply path 93 that is formed in the third joint member 109 may communicate, via a swivel joint, with a portion of the hydraulic supply path 93 that extends from the pressure adjustment valve 90a. Accordingly, the common hydraulic source 194 and the hydraulic action portion 93b may communicate with each other via the hydraulic supply path 93. A portion of the hydraulic supply path 93 that extends between the pressure adjustment valve 90a and the third joint member 109 may be provided with a drain valve 199.

An energization controller 90b to which a detection signal from the current detection portion 209 is inputted may be connected to the pressure adjustment valve 90a. Based on a detection signal from the current detection portion 209, the energization controller 90b may control a demagnetized state and an excited state of the pressure adjustment valve 90a. For example, in a case where a detection signal from the current detection portion 209 indicates that "a difference in amount of electric current consumed by the motor M among the plurality of the drive units 1A is smaller than the predetermined value", the energization controller 90b may bring the pressure adjustment valve 90a to a demagnetized state without energizing it and hence to a closed valve state. On the other hand, in a case where a detection signal from the current detection portion 209 indicates that "a difference in amount of electric current consumed by the motor M among the plurality of the drive units 1A is not less than the predetermined value", the energization controller 90b may energize, by applying a voltage thereto, one of the pressure adjustment valves 90a that controls a hydraulic pressure supplied to at least one of the drive units 1A whose motor M has a largest amount of electric current consumed and/or one of the drive units 1A whose motor M has a smallest amount of electric current consumed, thus brining that one of the pressure adjustment valves 90a to an excited state and hence to an opened valve state. When the pressure adjustment valve 90a is opened, the liquid transmission medium from the common hydraulic source 194 may flow into the portion of the hydraulic supply path 93 that is formed in the pinion 100, so that the liquid transmission medium, which has a relatively high pressure, may flow into the hydraulic action portion 93b. By the high-pressure liquid transmission medium that has flowed from the hydraulic supply path 93 into the hydraulic action portion 93b, the clutch driving member 91 may be pressed down to move in such a direction as to be separated from the clutch actuation portions 89 (the first friction plate 89a and the second friction plate 89b).

Fig. 6A and Fig. 6B are conceptional views for explaining a mechanism of transmission and non-transmission of rotary power from the output shaft 66 to the pinion 100 in the example shown in Fig. 5. Fig. 6A shows a transmission state of rotary power, and Fig. 6B shows a non-transmission state of rotary power. In Fig. 6A and Fig. 6B, for the sake of easier understanding of an actuation mechanism, various components are depicted in a simplified manner, and depiction of some components is omitted.

In a case of performing transmission of rotary power from the output shaft 66 to the pinion 100, the pressure adjustment valve 90a shown in Fig. 5 may be closed to block circulation of the liquid transmission medium in the hydraulic supply path 93, so that a pressure in a portion of the hydraulic supply path 93 that leads from the pressure adjustment valve 90a into the pinion 100 may be kept low. In this case, as shown in Fig. 6A, the clutch driving member 91 may be pressed up by the elastic member 92, and thus, being sandwiched between the the clutch driving member 91 and the pinion 100, the first friction plate 89a and the second friction plate 89b may be pressed from both sides relative to the center axis L1 direction. This cause the first friction plate 89a and the second friction plate 89b to be frictionally engaged with each other to transmit rotary power from the output shaft 66 to the pinion 100, thus causing the pinion 100 to rotate integrally with the output shaft 66 via the first friction plate 89a and the second friction plate 89b.

In this case, it may also be possible that the drain valve 199 shown in Fig. 5 is opened as required so that the liquid transmission medium in the portion of the hydraulic supply path 93 that leads from the pressure adjustment valve 90a into the pinion 100 is discharged so as to proactively decrease a pressure in the hydraulic supply path 93. Thus, even when, as will be mentioned later, a portion of the hydraulic supply path 93 that leads from the pressure adjustment valve 90a to the hydraulic action portion 93b is filled with the high-pressure liquid transmission medium, so that transmission of rotary power between the output shaft 66 and the pinion 100 is withheld, the drive unit 1A may be made available again by opening the drain valve 199. That is, the drain valve 199 may be opened to discharge the liquid transmission medium so that a pressure in the hydraulic supply path 93 is decreased, and thus the clutch driving member 91 may be pressed up by the elastic member 92 to cause the first friction plate 89a and the second friction plate 89b to be frictionally re-engaged, so that rotary power can be transmitted from the output shaft 66 to the pinion 100.

On the other hand, in a case of withholding transmission of rotary power from the output shaft 66 to the pinion 100, the pressure adjustment valve 90a may be opened to permit circulation of the liquid transmission medium in the hydraulic supply path 93, so that the high-pressure liquid transmission medium may be fed from the common hydraulic source 194 to the portion of the hydraulic supply path 93 that is formed in the pinion 100. Then, the high-pressure liquid transmission medium may flow from the portion of the hydraulic supply path 93 that is formed in the pinion 100 into the hydraulic action portion 93b, so that, against an elastic force of the elastic member 92, the clutch driving member 91 may move in such a direction as to be separated from the first friction plate 89a and the second friction plate 89b. Thus, a pressing force acting between the first friction plate 89a and the second friction plate 89b may be decreased to release frictional engagement between the first friction plate 89a and the second friction plate 89b, so that rotary power of the output shaft 66 may no longer be transmitted to the pinion 100. As a result of this, even when the output shaft 66 and the first friction plate 89a may rotate about the center axis L1, basically, the second friction plate 89b and the pinion 100 may not rotate.

Accordingly, during a time when a "difference in amount of electric current consumed by the motor M among the plurality of the drive units 1A is smaller than the predetermined value", the pressure adjustment valve 90a is brought to a closed valve state under control of the energization controller 90b, and thus the clutch driving member 91 may be pressed against the second friction plate 89b by the elastic member 92, so that the first friction plate 89a and the second friction plate 89b may be engaged with each other. Thus, the output shaft 66 and the pinion 100 may be joined to each other via the first friction plate 89a and the second friction plate 89b, so that rotary power of the output shaft 66 may be transmitted to the pinion 100 via the first friction plate 89a and the second friction plate 89b.

On the other hand, in a case where some abnormality has occurred with a particular one of the drive units 1A (particularly, in terms of a rotary operation of the power shaft 35 of the motor M), so that a "difference in amount of electric current consumed by the motor M among the plurality of the drive units 1A is not less than the predetermined value", the pressure adjustment valve 90a may be energized under control of the energization controller 90b to be brought to an opened valve state, and thus the high-pressure liquid transmission medium may flow from the hydraulic supply path 93 into the hydraulic action portion 93b. As a result of this, the clutch driving member 91 may be pressed down to release engagement between the first friction plate 89a and the second friction plate 89b, thus bringing the output shaft 66 and the pinion 100 to a non-joint state, thereby being able to prevent breakage of the pinion 100 and the ring gear 202 engaged with the pinion 100 before it occurs.

As described in the foregoing, according to this embodiment, based on a difference in amount of electric current consumed by the motor M among the plurality of the drive units 1A, switching between transmission and non-transmission of rotary power from the output shaft 66 to the pinion 100 can be performed, thereby being able to prevent breakage of the ring gear 202 before it occurs. Particularly, the common hydraulic source 194 that is also a power source for the gear inhibition portion 250 may feed out the liquid transmission medium, which has relatively large energy, and a hydraulic pressure supplied from the common hydraulic source 194 thus described may be used to switch a state of the clutch actuation portions 89 (the clutch mechanism 88) from an engagement state to a non-engagement state, so that transmission of rotary power between the output shaft 66 and the pinion 100 can be instantaneously brought to a non-transmission state. Furthermore, the power source for the clutch mechanism 88 may be shared with any other device (in this embodiment, the gear inhibition portion 250), and thus an apparatus configuration is simplified so that space saving can be achieved.

While the above-mentioned example explains that the ring gear 202 that rotates together with the nacelle 204 is fixed by the gear inhibition portion 250, there is no limitation thereto. For example, it may also be possible that any other type of rotary member (for example, the rotary pedestal 205 or the like in Fig. 1) that rotates together with the nacelle 204 is fixedly held by the gear inhibition portion 250, and thus rotation of the nacelle 204 (the movable portion) with respect to the tower 201 (the base portion) is inhibited. Furthermore, while the above-mentioned gear inhibition portion 250 may be provided as a unit that inhibits rotation of the nacelle 204, it may also be possible that the gear inhibition portion 250 is provided as a unit that inhibits rotation of the blades 203. In this case, similarly to the above-mentioned example, a rotary member (for example, a ring gear, a rotary pedestal, or the like) that rotates together with the blades 203 may be fixedly held by the gear inhibition portion 250, and thus rotation of the blades 203 can be inhibited. As described above, by using a pressure supplied from the clutch hydraulic source 94, the gear inhibition portion 250 can inhibit rotation of the nacelle 204 or the blades 203 via the ring gear 202.

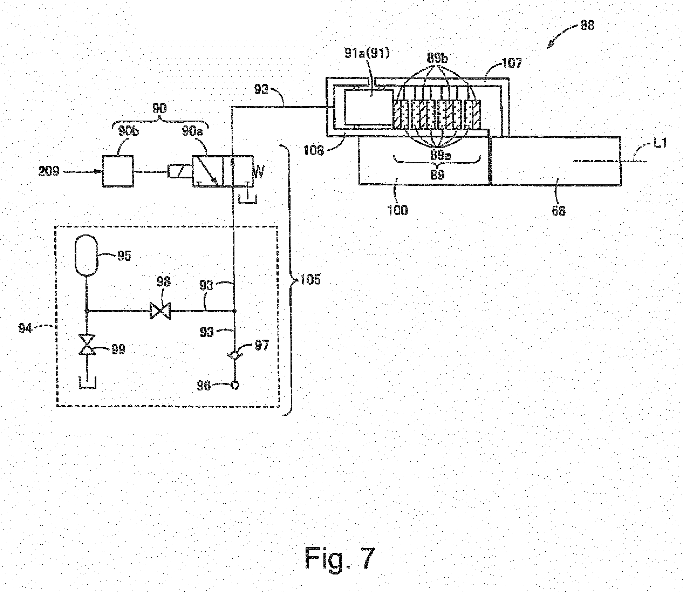

[Modification Example of Clutch Mechanism and Clutch Control Portion] Fig. 7 is a diagram showing a functional configuration example of the clutch mechanism 88 and the clutch control portion 90 according to one modification example.

A clutch actuation portion 89 of this example may have a plurality of first friction plates 89a mounted to the output shaft 66 via a first joint member 107 and a plurality of second friction plates 89b mounted to the pinion 100 via a second joint member 108. The first friction plates 89a, the first joint member 107, and the output shaft 66 may be latched together so as to rotate integrally about the center axis L1. Similarly, the second friction plates 89a, the second joint member 108, and the pinion 100 may be latched together so as to rotate integrally about the center axis L1. Accordingly, in a case where the first friction plates 89a and the second friction plates 89b are engaged by friction or the like and thus rotate integrally about the center axis L1, the output shaft 66, the first joint member 107, the second joint member 108, and the pinion 100 may also rotate integrally about the center axis L1.

It may also be possible that the first joint member 107 and the second joint member 108 have any configuration as long as they can properly support the first friction plates 89a and the second friction plates 89b. It may also be possible that the first joint member 107 and the second joint member 108 are formed of a single member or a combination of a plurality of members. For example, it may also be possible that the first joint member 107 is formed of a member spline-coupled to the output shaft 66 and also spline-coupled to each of the first friction plates 89a. Furthermore, it may also be possible that the second joint member 108 is formed of a member spline-coupled to the pinion 100 and also spline-coupled to the plurality of second friction plates 89a. The first friction plates 89a and the second friction plates 89b may be configured to be slightly movable in the axial direction within such a range that coupling between the first friction plates 89a and the first joint member 107 and coupling between the second friction plates 89b and the second joint member 108 are maintained.

Via a hydraulic piston 91a that functions as the clutch driving member 91, a clutch control portion 90 may perform transmission of rotary power from the output shaft 66 to the pinion 100 by engaging the first friction plates 89a with the second friction plates 89b (in this example, fixing them by friction), and withhold transmission of rotary power from the output shaft 66 to the pinion 100 by releasing engagement between the first friction plates 89a and the second friction plates 89b.

The hydraulic piston 91a of this example may be in contact with at least either (in this example, the second friction plates 89b) of the first friction plates 89a and the second friction plates 89b. The clutch hydraulic source 94 may be connected to the hydraulic piston 91a via the hydraulic supply path 93. The hydraulic piston 91a may have a piston-cylinder structure and, under control of the clutch control portion 90, can change a press-against force of the second friction plates 89b with respect to the first friction plates 89a in accordance with a pressure of the liquid transmission medium in the hydraulic supply path 93. That is, under control of the clutch control portion 90, the hydraulic piston 91a may be disposed at either "such a position that the second friction plates 89b are pressed against the first friction plates 89a so that the first friction plates 89a and the second friction plate 89b are brought to an engagement state" or "such a position that the second friction plates 89b are not pressed against the first friction plates 89b so that the first friction plates 89a and the second friction plates 89b are brought to a non-engagement state". In an example shown in Fig. 7, the first friction plates 89a and the second friction plates 89b may be disposed between the hydraulic piston 91a and a member fixedly disposed relative to the axial direction on a side closer to the motor M than the hydraulic piston 91a, and in accordance with a position of the hydraulic piston 91a in the axial direction, switching between an engagement state and a non-engagement state between the first friction plates 89a and the second friction plates 89b may be performed.

The piston-cylinder structure of the hydraulic piston 91a is not particularly limited. For example, in the example shown in Fig. 7, the hydraulic piston 91a may be disposed in a space defined by the first joint member 107, the second joint member 108, and the clutch actuation portion 89, and movement of the hydraulic piston 91a to the axial direction may be guided by the first joint member 107 and the second joint member 108. A sealing member such as an O-ring may be disposed between the hydraulic piston 91a and the second joint member 108. A space that is defined by the hydraulic piston 91a and the second joint member 108 and into which the liquid transmission medium in the hydraulic supply path 93 flows may have a liquid-tight structure, thus preventing the liquid transmission medium from leaking from said space to the outside. Thus, in a case where a pressure of the liquid transmission medium in the hydraulic supply path 93 is relatively high, the hydraulic piston 91a is pressed by said liquid transmission medium toward the clutch actuation portion 89, so that the second friction plates 89b are pressed against the first friction plates 89a. On the other hand, in a case where a pressure of the liquid transmission medium in the hydraulic supply path 93 is relatively low, the hydraulic piston 91a moves in such a direction as to be separated from the clutch actuation portion 89, so that the second friction plates 89b are not pressed against the first friction plates 89a by the hydraulic piston 91a.

The above-described movement of the hydraulic piston 91a may be controlled by the clutch control portion 90. That is, by the clutch control portion 90, movement of the hydraulic piston 91a to the axial direction may be controlled via the liquid transmission medium in the hydraulic supply path 93 so that switching between engagement and non-engagement between the first friction plates 89a and the second friction plates 89b is performed. Specifically, as shown in Fig. 7, the clutch control portion 90 may have a pressure adjustment valve 90a that is provided on a portion of the hydraulic supply path 93 that extends between the hydraulic piston 91a and the clutch hydraulic source 94 and formed of an electromagnetic valve and an energization controller 90b that is connected to the current detection portion 209 and controls demagnetization (non-energization) and excitation (energization) of the pressure adjustment valve 90a.

The pressure adjustment valve 90a may adjust a pressure of the liquid transmission medium with respect to the hydraulic piston 91a. Specifically, the pressure adjustment valve 90a may switch its valve state to either "such a state that circulation of the liquid transmission medium in the hydraulic supply path 93 is permitted while a sealed state of the hydraulic supply path 93 is maintained (an opened valve state)" or "such a state that a part of the liquid transmission medium in the hydraulic supply path 93 is exhausted to an external drain to release a pressure of the liquid transmission medium in the hydraulic supply path 93 (a pressure release state)". In the example shown in Fig. 7, when in a demagnetized state, the pressure adjustment valve 90a may be placed in an opened valve state, and when in an excited state, the pressure adjustment valve 90a may be placed in a pressure release state.

Based on a detection signal from the current detection portion 209, the energization controller 90b may control a demagnetized state and an excited state of the pressure adjustment valve 90a. For example, in a case where a detection signal from the current detection portion 209 indicates that a "difference in amount of electric current consumed by the motor M among the plurality of the drive units 1A is smaller than the predetermined value", the energization controller 90b may bring the pressure adjustment valve 90a to a demagnetized state without energizing it and hence to an opened valve state. On the other hand, in a case where a detection signal from the current detection portion 209 indicates that a "difference in amount of electric current consumed by the motor M among the plurality of the drive units 1A is not less than the predetermined value", the energization controller 90b may energize the pressure adjustment valve 90a by applying a voltage thereto, thus bringing the pressure adjustment valve 90a to an excited state and hence to a pressure release state.

Accordingly, during a time when there is no particular abnormality and a "difference in amount of electric current consumed by the motor M among the plurality of the drive units 1A is smaller than the predetermined value", the pressure adjustment valve 90a may be placed in an opened valve state, so that the liquid transmission medium in the hydraulic supply path 93 may press the hydraulic piston 91a, thus causing the second friction plates 89b to be pressed against the first friction plates 89a and engaged therewith. In this case, as a result of engagement between the first friction plates 89a and the second friction plates 89b, the output shaft 66 and the pinion 100 may be joined to each other, and thus rotary power of the output shaft 66 may be transmitted to the pinion 100 via the first joint member 107, the first friction plates 89a, the second friction plates 89b, and the second joint member 108.

On the other hand, in a case where some abnormality has occurred with a particular one of the drive units 1A (particularly, a rotary operation of the power shaft 35 of the motor M) and a "difference in amount of electric current consumed by the motor M among the plurality of the drive units 1A is not less than the predetermined value", the pressure adjustment valve 90a may be placed in a pressure release state, so that the hydraulic piston 91a may be released from being pressed by the liquid transmission medium in the hydraulic supply path 93, and thus engagement between the first friction plates 89a and the second friction plates 89b may be released. This may bring the output shaft 66 and the pinion 100 to a non-joint state, thereby being able to prevent breakage of the pinion 100 and the ring gear 202 engaged with the pinion 100 before it occurs.

The clutch hydraulic source 94 in this embodiment may have an accumulator 95, a replenishment port 96 through which the hydraulic supply path 93 can be replenished with the liquid transmission medium, and a check valve 97 provided between said replenishment port 96 and the accumulator 95. The accumulator 95 may be joined to the hydraulic supply path 93 via a relief valve 98, and a drain valve 99 may be joined to the accumulator 95. The check valve 97 may prevent the liquid transmission medium in the hydraulic supply path 93 from flowing out through the replenishment port 96.

As described above, the clutch hydraulic source 94 of this example may be formed by using the accumulator 95, and thus compared with a hydraulic source using, for example, a pump or the like, a simplified configuration can be obtained. Furthermore, even when the pressure adjustment valve 90a is placed in a pressure release state, and thus the output shaft 66 and the pinion 100 are brought to a non-joint state, the pressure adjustment valve 90a is brought back to an opened valve state so that a new flow of the liquid transmission medium is supplied to the hydraulic supply path 93 via the replenishment port 96, and thus the first friction plates 89a and the second friction plates 89b are re-engaged with each other, so that the output shaft 66 and the pinion 100 can be brought back to a joint state.

[Other Modification Examples] The present invention is not limited to the above-mentioned embodiment and modification example, and it may also be possible to make various modifications thereto or combine the above-mentioned embodiment and modification example as appropriate..

For example, there is no particular limitation on specific configurations and disposition of the clutch mechanism 88 and the clutch control portion 90 that perform switching between transmission and non-transmission of rotary power from the output shaft 66 to the pinion 100. In the above-mentioned examples, the clutch actuation portion 89 (the first friction plate 89a and the second friction plate 89b) may be provided at a position separated from the center axis L1. It may also be possible, however, that the clutch actuation portion 89 is provided on the center axis L1. In this case, it may also be possible that the clutch actuation portion 89 (friction plates and so on) is provided on each of an "end surface of the output shaft 66 on a pinion 100 side" and an "end surface of the pinion 100 on an output shaft 66 side".

In such a case, when a detection signal from the current detection portion 209 indicates that a "difference in amount of electric current consumed by the motor M among the plurality of the drive units 1A is smaller than the predetermined value", respective relative positions of the output shaft 66 and the pinion 100 may be controlled by the clutch control portion so that the "clutch actuation portion 89 on the end surface of the output shaft 66 on the pinion 100 side" and the "clutch actuation portion 89 on the end surface of the pinion 100 on the output shaft 66 side" are engaged with each other. Thus, rotary power of the output shaft 66 may be transmitted to the pinion 100 via the clutch actuation portion 89. On the other hand, when a detection signal from the current detection portion 209 indicates that a "difference in amount of electric current consumed by the motor M among the plurality of the drive units 1A is not less than the predetermined value", respective relative positions of the output shaft 66 and the pinion 100 may be controlled by the clutch control portion so that the "clutch actuation portion 89 on the end surface of the output shaft 66 on the pinion 100 side" and the "clutch actuation portion 89 on the end surface of the pinion 100 on the output shaft 66 side" are separated from each other, and thus engagement therebetween is released. Thus, rotary power of the output shaft 66 can be prevented from being transmitted to the pinion 100.

Furthermore, while in the above-mentioned examples, the accumulator 95 is used to form the clutch hydraulic source 94, it may also be possible that a hydraulic pump or the like is used to form the clutch hydraulic source 94.

Furthermore, while in the above-mentioned examples, the present invention is applied to the drive unit 1A equipped with the eccentric swing type speed reduction portion 30, it may also be possible that the present invention is applied to the drive unit 1A equipped with any other type of speed reduction portion. For example, it may also be possible that, in place of the eccentric swing type speed reduction portion 30, any other type of speed reduction portion such as a planetary gear type speed reduction portion is provided, and the present invention is applicable also to the drive unit 1A in which rotary power is transmitted from the power shaft 35 of the motor M to said other type of speed reduction portion, and the rotary power that has been decelerated to have an increased torque is transmitted from said other type of speed reduction portion to the output shaft 66. Furthermore, it may also be possible that, in addition to the above-mentioned eccentric swing type speed reduction portion 30, any other type of speed reduction portion such as a planetary gear type speed reduction portion is also provided. For example, the present invention is applicable also to the drive unit 1A in which rotary power is transmitted from the power shaft 35 of the motor M to said other type of speed reduction portion, and rotary power that has been decelerated to have an increased torque is transmitted from said other type of speed reduction portion to the eccentric swing type speed reduction portion 30 via the input gear 20. Also in these cases, switching between transmission and non-transmission of rotary power from the output shaft 66 to the pinion 100 may be performed by the clutch mechanism 88, thereby being able to prevent a malfunction such as breakage of components before it occurs.

The present invention is not limited to the above-mentioned individual embodiments and embraces various modifications conceivable by those skilled in the art, and effects of the present invention are also not limited to the above-mentioned contents. That is, the protection scope is defined by the appended claims.

## Claims

1. A wind power generator, comprising:
a ring gear (202);
at least one drive unit (1A) for rotating a nacelle (204) or a blade (203) via the ring gear (202);
a clutch hydraulic source (94); and
a clutch control portion (90),
wherein the at least one drive unit (1A) includes:
a motor (M) having a power shaft (35); an input gear (20) configured to be rotated by power transmitted from the power shaft (35); a speed reduction portion (30) having an output shaft (66) configured to be rotated by power inputted via the input gear (20); a pinion (100) engaged with the ring gear (202) and configured to be rotated by rotary power transmitted from the output shaft (66); and
a hydraulic clutch mechanism (88),
the clutch hydraulic source (94) is configured to supply a hydraulic pressure to the clutch mechanism (88), and the clutch control portion (90) is configured to control a hydraulic pressure supplied from the clutch hydraulic source (94) to the clutch mechanism (88);
**characterized in that**
the hydraulic clutch mechanism (88) is configured to perform switching between transmission and non-transmission of rotary power from the output shaft (66) to the pinion (100).

2. The wind power generator according to claim 1, wherein the at least one drive unit (1A) comprises a plurality of drive units (1A), and the clutch hydraulic source (94) supplies a hydraulic pressure to the clutch mechanism (88) of each of the plurality of drive units (1A).

3. The wind power generator according to claim 1 or 2, further comprising:
a gear inhibition portion (250) for inhibiting rotation of the nacelle (204) or the blade (203) via the ring gear (202), the gear inhibition portion (250) being configured to use a hydraulic pressure supplied from the clutch hydraulic source (94) to inhibit the rotation of the nacelle (204) or the blade (203).

4. The wind power generator according to any one of claims 1 to 3, wherein the clutch mechanism (88) has a first friction plate (89a) mounted to the output shaft (66) and a second friction plate (89b) mounted to the pinion (100), and the clutch control portion (90) permits transmission of rotary power from the output shaft (66) to the pinion (100) by engaging the first friction plate (89a) with the second friction plate (89b), and restrains transmission of rotary power from the output shaft (66) to the pinion (100) by disengaging the first friction plate (89a) from the second friction plate (89b).

5. The wind power generator according to claim 4, wherein the clutch control portion (90) includes a clutch driving member (91) and a clutch switching portion (90a), the clutch driving member being configured to be brought into contact with at least one of the first friction plate (89a) and the second friction plate (89b), the clutch switching portion (90a) being configured to perform switching between engagement and non-engagement between the first friction plate (89a) and the second friction plate (89b) by controlling movement of the clutch driving member (91).

6. The wind power generator according to claim 5, wherein the clutch driving member (91) includes a hydraulic piston (91a), and the clutch switching portion (90a) performs the switching between engagement and non-engagement between the first friction plate (89a) and the second friction plate (89b) by controlling movement of the hydraulic piston (91a) via a liquid transmission medium.

7. The wind power generator according to any one of claims 1 to 6, wherein the at least one drive unit (1A) comprises a plurality of drive units (1A), the wind power generator further comprises a current detection portion (209) configured to detect an amount of electric current consumed by the motor (M) provided in each of the plurality of drive units (1A), and
the clutch control portion (90) controls a hydraulic pressure supplied from the clutch hydraulic source (94) to the clutch mechanism (88) provided in each of the plurality of drive units (1A), based on a difference in amount of electric current consumed by the motor (M) among the plurality of drive units (1A), the difference being derived from a detection result by the current detection portion (209).

## Patentansprüche

1. Ein Windkraftgenerator, umfassend:
ein Hohlrad (202);
zumindest eine Antriebseinheit (1A) zum Rotieren eines Maschinenhauses (204) oder eines Blattes (203) über das Hohlrad (202);
eine Kupplungshydraulikquelle (94); und
einen Kupplungssteuerabschnitt (90),
wobei die zumindest eine Antriebseinheit (1A) beinhaltet:
einen Motor (M), der eine Leistungswelle (35) aufweist; ein Eingangszahnrad (20), das konfiguriert ist, durch Leistung, die von der Leistungswelle (35) übertragen wird, rotiert zu werden; einen Geschwindigkeitsreduzierungsabschnitt (30), der eine Ausgangswelle (66) aufweist, die konfiguriert ist, durch Leistung, die über das Eingangszahnrad (20) eingebracht wird, rotiert zu werden; ein Ritzel (100), das mit dem Hohlrad (202) im Eingriff steht und konfiguriert ist, durch Drehleistung, die von der Ausgangswelle (66) übertragen wird, rotiert zu werden; und
einen hydraulischen Kupplungsmechanismus (88),
die Kupplungshydraulikquelle (94) ist konfiguriert, einen Hydraulikdruck an den Kupplungsmechanismus (88) bereitzustellen, und der Kupplungssteuerabschnitt (90) ist konfiguriert, einen Hydraulikdruck zu steuern, der von der Kupplungshydraulikquelle (94) an den Kupplungsmechanismus (88) bereitgestellt wird;
**dadurch gekennzeichnet, dass**
der hydraulische Kupplungsmechanismus (88) konfiguriert ist, Umschalten zwischen Übertragung und Nicht-Übertragung einer Drehleistung von der Ausgangswelle (66) zu dem Ritzel (100) durchzuführen.

2. Der Windkraftgenerator nach Anspruch 1, wobei die zumindest eine Antriebseinheit (1A) eine Vielzahl von Antriebseinheiten (1A) umfasst, und die Kupplungshydraulikquelle (94) einen Hydraulikdruck an den Kupplungsmechanismus (88) von jeder von der Vielzahl von Antriebseinheiten (1A) bereitstellt.

3. Der Windkraftgenerator nach Anspruch 1 oder 2, weiterhin umfassend:
einen Zahnradsperrungsabschnitt (250) zum Sperren von Rotation des Maschinenhauses (204) oder des Blatts (203) über das Hohlrad (202), wobei der Zahnradsperrungsabschnitt (250) konfiguriert ist, einen Hydraulikdruck, der von der Kupplungshydraulikquelle (94) bereitgestellt wird, zu benutzen, um die Rotation des Maschinenhauses (204) oder des Blattes (203) zu sperren.

4. Der Windkraftgenerator nach irgendeinem der Ansprüche 1 bis 3, wobei der Kupplungsmechanismus (88) eine erste Reibplatte (89a), die an der Ausgangswelle (66) montiert ist, und eine zweite Reibplatte (89b) aufweist, die an dem Ritzel (100) montiert ist, und der Kupplungssteuerabschnitt (90) Übertragung von Drehleistung von der Ausgangswelle (66) an das Ritzel (100) durch Eingreifen der ersten Reibplatte (89a) mit der zweiten Reibplatte (89b) erlaubt, und Übertagung von Drehleistung von der Ausgangswelle (66) an das Ritzel (100) durch Trennen der ersten Reibplatte (89a) von der zweiten Reibplatte (89b) hemmt.

5. Der Windkraftgenerator nach Anspruch 4, wobei der Kupplungssteuerabschnitt (90) einen Kupplungsantriebselement (91) und einen Kupplungsumschaltabschnitt (90a) beinhaltet, das Kupplungsantriebselement (91) konfiguriert ist, in Kontakt mit zumindest einem von der ersten Reibplatte (89a) und der zweiten Reibplatte (89b) gebracht zu werden, der Kupplungsumschaltabschnitt (90a) konfiguriert ist, Umschalten zwischen Eingriff und Nicht-Eingriff zwischen der ersten Reibplatte (89a) und der zweiten Reibplatte (89b) durch Steuern von Bewegung des Kupplungsantriebselements (91) durchzuführen.

6. Der Windkraftgenerator nach Anspruch 5, wobei das Kupplungsantriebselement (91) einen hydraulischen Kolben (91a) beinhaltet, und der Kupplungsumschaltabschnitt (90a) das Umschalten zwischen Eingriff und Nicht-Eingriff zwischen der ersten Reibplatte (89a) und der zweiten Reibplatte (89b) durch Steuern von Bewegung des hydraulischen Kolbens (91a) über ein flüssiges Übertragungsmedium durchführt.

7. Der Windkraftgenerator nach irgendeinem der Ansprüche 1 bis 6, wobei die zumindest eine Antriebseinheit (1A) eine Vielzahl von Antriebseinheiten (1A) umfasst, der Windkraftgenerator weiterhin einen Stromdetektionsabschnitt (209) umfasst, der konfiguriert ist, eine Menge an elektrischem Strom, der von dem Motor (M), der in jedem von der Vielzahl von Antriebseinheiten (1A) vorgesehen ist, konsumiert wird, zu detektieren, und der Kupplungssteuerabschnitt (90) einen Hydraulikdruck, der von der Kupplungshydraulikquelle (94) an den Kupplungsmechanismus (88), der in jeder von der Vielzahl von Antriebseinheiten (1A) vorgesehen ist, bereitgestellt wird, basierend auf einem Unterschied in einer Menge an elektrischem Strom, der von dem Motor (M) konsumiert wird, unter der Vielzahl von Antriebseinheiten (1A) steuert, wobei der Unterschied von einem Detektionsresultat von dem Stromdetektionsabschnitt (209) abgeleitet wird.

## Revendications

1. Générateur d'énergie éolienne, comprenant :
une couronne dentée (202) ;
au moins une unité d'entraînement (1A) pour faire tourner une nacelle (204) ou une pale (203) via la couronne dentée (202) ;
une source hydraulique d'embrayage (94) ; et
une partie de commande d'embrayage (90),
dans lequel la au moins une unité d'entraînement (1A) comprend :
un moteur (M) ayant un arbre de transmission (35) ; un engrenage d'entrée (20) configuré pour être mis en rotation par une puissance transmise par l'arbre de transmission (35) ; une partie de réduction de vitesse (30) ayant un arbre de sortie (66) configuré pour être mis en rotation par une puissance entrée via l'engrenage d'entrée (20) ; un pignon (100) en prise avec la couronne dentée (202) et configuré pour être mis en rotation par une puissance de rotation transmise par l'arbre de sortie (66) ; et
un mécanisme d'embrayage hydraulique (88),
la source hydraulique d'embrayage (94) est configurée pour fournir une pression hydraulique au mécanisme d'embrayage (88), et la partie de commande d'embrayage (90) est configurée pour contrôler une pression hydraulique fournie par la source hydraulique d'embrayage (94) au mécanisme d'embrayage (88) ;
**caractérisé en ce que**
le mécanisme d'embrayage hydraulique (88) est configuré pour effectuer une commutation entre une transmission et une non-transmission de puissance de rotation depuis l'arbre de sortie (66) au pignon (100).

2. Générateur d'énergie éolienne selon la revendication 1, dans lequel la au moins une unité d'entraînement (1A) comprend une pluralité d'unités d'entraînement (1A), et la source hydraulique d'embrayage (94) fournit une pression hydraulique au mécanisme d'embrayage (88) de chacune de la pluralité d'unités d'entraînement (1A).

3. Générateur d'énergie éolienne selon la revendication 1 ou 2, comprenant en outre : une partie d'inhibition d'engrenage (250) pour inhiber une rotation de la nacelle (204) ou de la pale (203) via la couronne dentée (202), la partie d'inhibition d'engrenage (250) étant configurée pour utiliser une pression hydraulique fournie par la source hydraulique d'embrayage (94) pour inhiber la rotation de la nacelle (204) ou de la pale (203).

4. Générateur d'énergie éolienne selon l'une quelconque des revendications 1 à 3, dans lequel le mécanisme d'embrayage (88) a une première plaque de friction (89a) montée sur l'arbre de sortie (66) et une seconde plaque de friction (89b) montée sur le pignon (100), et la partie de commande d'embrayage (90) permet une transmission de puissance de rotation depuis l'arbre de sortie (66) au pignon (100) en mettant en prise la première plaque de friction (89a) avec la seconde plaque de friction (89b), et empêche une transmission de puissance de rotation depuis l'arbre de sortie (66) au pignon (100) en dégageant la première plaque de friction (89a) vis-à-vis de la seconde plaque de friction (89b).

5. Générateur d'énergie éolienne selon la revendication 4, dans lequel la partie de commande d'embrayage (90) comprend un élément d'entraînement d'embrayage (91) et une partie de commutation d'embrayage (90a), l'élément d'entraînement d'embrayage étant configuré pour être mis en contact avec au moins l'une parmi la première plaque de friction (89a) et la seconde plaque de friction (89b), la partie de commutation d'embrayage (90e) étant configurée pour effectuer une commutation entre une mise en prise et une non-mise en prise entre la première plaque de friction (89a) et la seconde plaque de friction (89b) en commandant un mouvement de l'élément d'entraînement d'embrayage (91).

6. Générateur d'énergie éolienne selon la revendication 5, dans lequel l'élément d'entraînement d'embrayage (91) comprend un piston hydraulique (91a), et la partie de commutation d'embrayage (90a) effectue la commutation entre une mise en prise et une non-mise en prise entre la première plaque de friction (89a) et la seconde plaque de friction (89b) en commandant un mouvement du piston hydraulique (91a) via un milieu de transmission liquide.

7. Générateur d'énergie éolienne selon l'une quelconque des revendications 1 à 6, dans lequel la au moins une unité d'entraînement (1A) comprend une pluralité d'unités d'entraînement (1A), le générateur d'énergie éolienne comprend en outre une partie de détection de courant (209) configurée pour détecter une quantité de courant électrique consommé par le moteur (M) agencé dans chacune de la pluralité d'unités d'entraînement (1A), et la partie de commande d'embrayage (90) commande une pression hydraulique fournie par la source hydraulique d'embrayage (94) au mécanisme d'embrayage (88) agencé dans chacune de la pluralité d'unités d'entraînement (1A), sur la base d'une différence de quantité de courant électrique consommé par le moteur (M) parmi la pluralité d'unités d'entraînement (1A), la différence étant dérivée d'un résultat de détection par la partie de détection de courant (209).
